# EUROPEAN PATENT APPLICATION

(11) **EP 4 079 696 A1**
(43) Date of publication of application: **26.10.2022**
(21) Application number: 20889478.2
(22) Date of filing: 06.11.2020
(51) Int. Cl.: C03C 3/064, C03C 3/091, C03C 3/085, C03B 19/10, C03C 4/00

(54) **ANTIMICROBIAL GLASS COMPOSITION AND ANTIMICROBIAL GLASS POWDER PREPARATION METHOD USING SAME**

(30) Priority: 22.11.2019 KR 20190151583
(71) Applicant: LG Electronics Inc., SEOUL 07336 (KR)
(72) Inventor: KIM, Namjin, Seoul 06772 (KR); KIM, Daesung, Seoul 06772 (KR); KIM, Young Seok, Seoul 06772 (KR)
(74) Representative: Vossius & Partner Patentanwälte Rechtsanwälte mbB
(86) International application number: PCT/KR2020/015542
(87) International publication number: WO 2021/101143

(57) **Abstract**

Disclosed are an antimicrobial glass composition and an antimicrobial glass powder preparation method using the same, the antimicrobial glass composition which is a novel silicate-based glass composition exhibiting excellent durability as well as an excellent antimicrobial activity. An antimicrobial glass composition according to the present invention comprises a component which is innocuous to the human body, and has excellent durability and water resistance and thus can permanently retain an antimicrobial function. Also, the antimicrobial glass composition according to the present invention can exhibit an excellent antimicrobial activity even without the addition of expensive Ag-based components and thus is economical.

## Description

### BACKGROUND

### [Technical Field]

The present disclosure relates to an antimicrobial (or antimicrobial) glass composition and a method of preparing antimicrobial glass powder using the same.

### [Background Art]

Microorganisms such as germs, fungi and bacteria are ubiquitous in our living spaces (e.g., washbasins, refrigerator shelves and washing machines). If these microbes get into our bodies, they cause life-threatening infections. Accordingly, there is a need for an antimicrobial glass composition that is capable of controlling the spread of microorganisms in household items such as washbasins, refrigerator shelves, ovens or washing machines.

Conventionally, a method of increasing moisture and the number of hydrogen positiveions generated from molybdenum oxide by including molybdenum oxide in the antimicrobial glass composition is used. Accordingly, an acidic environment is created in an aqueous medium and microorganisms are killed by the acidic environment.

However, if a single molybdenum oxide is used in the conventional antimicrobial (or antibacterial) glass composition, there might be a problem in that water resistance becomes vulnerable and another problem in that an acidic environment must be created.

In addition, to secure sufficient water resistance, there may be a method of using a complex oxide in which molybdenum and silver or molybdenum and copper are combined in the antibacterial glass composition. However, when the complex oxide is included in the antimicrobial glass composition, the proportion of molybdenum is likely to decrease. Accordingly, it could be difficult to create the acidic environment of the aqueous medium so that there might be a problem in that antimicrobial activity is deteriorated.

When the antimicrobial glass composition contains the complex in which molybdenum and silver or molybdenum and copper are combined, there might be a problem in that coagulation and cytotoxicity occur in the human body.

In addition, expensive components (e.g., silver) might increase the manufacturing cost of the antimicrobial glass composition.

An antimicrobial glass composition having an increased ZnO content of 50% by weight (i.e., wt) or more is well known. However, a glass composition capable of exhibiting antimicrobial activity only with ZnO might have a problem in that continuous elution of Zn is concerned and durability is relatively lowered.

### [Cited Reference]

### [Cited Patent Document]

[Cited Document 1] Korean Patent Publication No. 10-2016-0124193 (published on October 26, 2016)

### [Description of Disclosure]

### [Technical Problems]

Accordingly, an object of the present disclosure is to address the above-noted and other problems and to provide an antimicrobial glass composition that is made of components harmless to the human body and has excellent durability and water resistance to permanently maintain an antimicrobial function, and an antimicrobial glass powder preparation method using the same.

Another object of the present disclosure is to provide an antimicrobial glass composition that may have an economical advantage and excellent antimicrobial activity, even without adding expensive Ag-based components, and an antimicrobial glass powder preparation method using the same.

Aspects according to the present disclosure are not limited to the above ones, and other aspects and advantages that are not mentioned above can be clearly understood from the following description and can be more clearly understood from the embodiments set forth herein. Additionally, the aspects and advantages in the present disclosure can be realized via means and combinations thereof that are described in the appended claims.

### [Technical Solutions]

To solve the above technical problems, an antimicrobial glass composition according to the present disclosure may be a novel silicate-based glass composition that has excellent durability and excellent antimicrobial activity.

In addition, the antimicrobial glass composition according to the present disclosure may be made of components harmless to the human body and have excellent durability and water resistance to permanently maintain an antimicrobial function,

In addition, the antimicrobial glass composition according to the present disclosure may have an economical advantage and excellent antimicrobial activity, even without adding expensive Ag-based components.

To this regard, an antimicrobial glass composition may include 20 to 45 % by weight (or wt) of SiO₂; 5 to 35% wt of B₂O₃; 1 to 20% wt of at least one or more of Na₂O, K₂O and Li₂O; 1 to 15 % by weight of at least one of Al₂O₃ and TiO₂;10 to 40% wt of at least one of ZnO and CaO; and 1 to 20% wt of at least one of CuO and Fe₂O₃.

### [Advantageous Effect]

The present disclosure may have following advantageous effects. The antimicrobial glass composition and the antimicrobial glass powder preparation method according to the present disclosure may provide a novel silicate-based glass composition that has excellent durability and excellent antimicrobial activity.

In addition, the antimicrobial glass composition and the antimicrobial glass powder preparation method using the same according to the present disclosure may be made of components harmless to the human body and have excellent durability and water resistance to permanently maintain an antimicrobial function, and have an economical advantage and excellent antimicrobial activity, even without adding expensive Ag-based components.

Accordingly, the antimicrobial glass composition and the antimicrobial glass powder preparation method using the same according to the present disclosure may be made of components harmless to the human body and have excellent durability and water resistance to permanently maintain an antimicrobial function, and may be properly used as a coating agent for glass shelves and an additive for plastic injection products.

Specific effects are described along with the above-described effects in the section of Detailed Description.

### [Brief Description of Drawings]

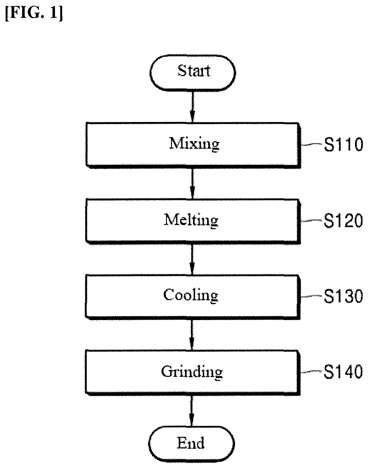

FIG. 1 is a flow chart showing an antimicrobial glass powder preparation method according to an embodiment of the present disclosure.

### [Detailed Description of Exemplary Embodiment]

The above-described aspects, features and advantages are specifically described hereunder with reference to the accompanying drawings such that one having ordinary skill in the art to which the present disclosure pertains can easily implement the technical spirit of the disclosure. In the *disclosure, detailed descriptions* of known technologies in relation to the disclosure *are* omitted if they are deemed to *make* the *gist* of the *disclosure* unnecessarily *vague.* Below, preferred embodiments according to the disclosure are specifically described with reference to the accompanying drawings. In the drawings, identical reference numerals can denote identical or similar components.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Hereinafter, an antimicrobial glass composition according to embodiments of the present disclosure and an antimicrobial glass powder preparation method using the same will be described in detail.

An antimicrobial glass composition according to an embodiment may be made of components that are harmless to the human body and have excellent durability and water resistance, thereby permanently maintaining an antimicrobial function.

The antimicrobial glass composition according to an embodiment of the present disclosure may be more economical and exhibit excellent effect in terms of antimicrobial activity, even without adding expensive Ag-based components.

In the conventional antimicrobial glass composition, metal ions diffuse into a cell membrane of bacterial due to pH increase action and metal ion elution through ion exchange between alkali on a glass surface and hydrogen ions (H+) of water, and they are absorbed to the cell membranes and proteins such as enzymes to destroy cell structures or induce enzyme inactivation and delay in the metabolism of microorganisms to cause cell death.

However, in the present disclosure as different from the conventional mechanism, glass may have the antimicrobial activity lasting permanently even unless reacting with water at all.

Specifically, the mechanism configured to express the antimicrobial activity according to the present disclosure may make the metal ions contained in the antimicrobial glass composition may have a positive charge on a surface charge (i.e., a zeta potential). Accordingly, the mechanism may attract negatively changed bacteria and create a charged environment in which bacterial cannot glow, thereby killing the bacteria.

For that, the antimicrobial glass composition according to an embodiment of the present may include 20 to 45 % by weight (i.e., wt) of SiO₂; 5 to 35 %wt of B₂O₃; 1 to 20 %wt of at least one of Na₂O, K₂O and Li₂O; 1 to 15 % wt of at least one of Al₂O₃ and TiO₂; 10 to 40 %wt of at least one of ZnO and CaO; and to 20 %wt of at least one of CuO and Fe₂O₃.

In addition, the antimicrobial glass composition according to an embodiment of the present disclosure may be a novel Silicate-based glass composition with excellent durability and antimicrobial activity.

Accordingly, the antimicrobial glass composition according to the embodiment of the present disclosure may be a permanently useable as well as economical antimicrobial agent that can be used as a coating agent for a glass shelf, an additive for plastic injection moldings and the like.

The antimicrobial glass composition having such excellent durability may be categorized into two types roughly.

First, one type is an antimicrobial glass composition of a glass matrix structure having a strong durability by forming a glass structure. The antimicrobial glass composition of the glass matrix may serve as a carrier of an existing inorganic antimicrobial agent, that is, it may serve to disperse a material expressing antimicrobial properties on a surface. If there is a difference, the conventional inorganic carrier supports an antimicrobial component on the surface, but the antimicrobial glass composition having the glass matrix structure allows a metal component expressing the antimicrobial properties to exist in the matrix structure as an ionic form.

To prepare the antimicrobial glass composition of the glass matrix having excellent durability, not only the content of glass forming agents (e.g., SiO₂ and B₂O₃) is important but also the combination ratio between alkali components may be a very important factor. This is because the mechanical properties of glass could change nonlinearly based on the ratio of Alkali oxides (e.g., Na₂O, K20 and Li₂O).

Second, the other type may be an antimicrobial glass composition having an effect of a metal ion contained therein. The metal ion may be an important factor that facilitates the antimicrobial performance. There may be a big difference in the antimicrobial properties of each component. Since there is also a big difference in the antimicrobial performance due to the interaction with the glass matrix component, it may be very important to optimize each component of the antimicrobial glass composition and the component ratio thereof.

Hereinafter, the function and content of each component contained in the antimicrobial glass composition according to the embodiment of the present disclosure will be described in detail.

SiO₂ is a glass former configured to facilitate vitrification, and a key component that serves as a structural framework of glass. In addition, although not acting as a direct component for expressing antimicrobial activity, SiO₂ forms less OH groups on a glass surface, compared to P₂O₅ which is a representative glass former so that it is advantageous in facilitating metal ions to positively charge the glass surface.

SiO₂ may be preferably contained in a content ratio of 20 to 45% wt of the total weight of the antimicrobial glass composition according to the present disclosure. 25 to 30% wt may be more preferred. When SiO₂ is added in a large amount in excess of 45%wt, there could be a problem in that workability and production yield are deteriorated in a cooling process as the viscosity increases in a glass melting process. Conversely, when SiO₂ is added in an amount of less than 20%wt, there could be a problem in that the glass structure is weakened and water resistance is lowered.

B₂O₃ may be a component serving as a glass former to enable vitrification of the glass composition, together with SiO₂. Since it has a low melting point, B₂O₃ may be a component that not only lowers the eutectic point of a melt material but also serves to facilitate vitrifcation of the glass composition.

Preferably, B₂O₃ may be added in a content ratio of 5 to 35% wt of the total weight of the antimicrobial glass composition according to the present invention, and 15 to 25% wt may be more preferable. When B₂O₃ is added in a large amount in excess of 35%, B₂O₃ disturbs the content of other components to cause a problem of rather deteriorating antimicrobial activity. Conversely, when it is added in an amount of less than 5% wt, the holding structure of glass might be weakened to reduce water resistance disadvantageously/

In the present disclosure, SiO₂ may be added in a content amount of less than B₂O₃. That is because it is advantageous in securing water resistance that the content amount of SiO₂ is more than that of B₂O₃.

Alkali oxides such as Na₂O, K₂O and Li₂O are oxides configured to act as a network modifier for non-cross linking in the glass composition. Those components cannot be vitrified along but vitrification may be possible when they are mixed with a network former such as SiO₂ and B₂O₃ in a certain ratio. If only one of those components is contained in the glass composition, the durability of the glass might be weakened in an area where vitrification is possible. However, when two or more of those components are contained in the glass composition, the glass durability may be increased again. This is called 'Mixed alkali effect'

Accordingly, it is preferred that at least one of Na₂O, K₂O and LI₂O is contained in a content ratio of 1 to 20 %wt based on the total weight of the antimicrobial glass composition according to the present disclosure. When one or more of Na20, K₂O and Li₂O is added in a large amount exceeding 20 %wt, the thermal properties of the glass composition could be deteriorated. Conversely, when one or more of Na₂O, K₂O and Li₂O is added in an amount of less than 1 %wt, it could be difficult to control the valence of a component such as ZnO and the antimicrobial activity may be then deteriorated.

However, when LiO is contained in a large amount exceeding 1 % wt, vitrification might be difficult and the possibility of devitrification might increase. Accordingly, it is more preferable that Li₂O is strictly controlled in a content ratio of 1% wt or less of the total weight of the antimicrobial glass composition according to the present disclosure.

Al₂O₃ and TiO₂ may be components configured to improve the chemical durability and heat resistance of glass. It is preferred that at least one of Al₂O₃ and TiO₂ is added in a content ratio of 1 to 15% wt of the total weight of the antimicrobial glass composition according to the present disclosure. When at least one of Al₂O₃ and TiO₂ is added to an amount of less than 1 %wt, the durability of glass might be deteriorated. Conversely, when at least one of Al₂O₃ and TiO₂ is added in a large amount exceeding 10 %wt, devitrification might occur during the cooling process out of the vitrification area or immiscibility might occur.

If TiO₂ is added in a large amount exceeding 4 %wt, there could be a problem of causing immiscibility of glass melt. Accordingly, it is preferred to strictly limit the content ratio of TiO₂ to 5 % wt or less of the total weight of the antimicrobial glass composition according to the present disclosure.

ZnO and CaO may be components that serve as a network former and a network modifier in the glass structure. In addition, they are ones of the key components that express the antimicrobial activity of the glass composition.

At least one of ZnO and Coa may be contained in a content ratio of 10 to 40 %wt of the total weight of the antimicrobial glass composition according to the present disclosure. When at least one of ZnO and CoO is added less than 10 % wt, it might be difficult to express the antimicrobial activity of the glass composition. Conversely, when at least one of ZnO andCaO is added in a large amount exceeding 40%wt, the durability or thermal properties of the glass composition might be deteriorated.

CuO and Fe₂O₃ may be components that function to facilitate glass to express its own antimicrobial effect. In addition, when glass is used as a coating material on a low-carbon steel substrate, CuO and Fe₂O₃ may function to improve adhesion of a glass coating layer by inducting a chemical bond between the substrate and glass.

At least one of CuO and Fe₂O₃ may be added in a content ratio of 1 to 20 % wt of the total weight of the antimicrobial glass composition according to the present disclosure. If at least one of CuO and Fe₂O₃ is added in an amount of less than 1 %wt, the antimicrobial activity of glass might be deteriorated. Conversely, if at least one of CuO and Fe₂O₃ is added in a large amount exceeding 20 % wt, the durability of glass might be deteriorated.

If CuO is added to less than 1 % wt, there could be a concern that the antimicrobial activity cannot be expressed properly. Accordingly, to express the antimicrobial activity, it is necessary that CuO should be contained in a content ratio of 1% wt or more of the total antimicrobial glass composition, more particularly, 1 to 10% wt.

Hereinafter, referring to the accompanying drawings, a preparation method of antimicrobial glass powder according to an embodiment of the present disclosure will be described.

FIG. 1 is a flow chart showing an antimicrobial glass powder preparation method according to an embodiment of the present disclosure.

As shown in FIG. 1, the antimicrobial glass powder preparation method according to the embodiment of the present disclosure may include a mixing process S110, a melting process S120, a cooling process S130 and a grinding process S140.

### Mixing

In the mixing process S110, 20 to 45 % wt of SiO₂, 5 to 35% wt of B₂O₃, 1 to 20% wt of at least one of Na₂O, K₂O and Li₂O, 1 to 15 %wt of at least one of Al₂O₃ and TiO₂, 10 to 40 % wt of at least one of ZnO and CaO, and 1 to 20 % wt of at least one of CuO and Fe₂O₃ may be mixed and agitated, thereby forming an antimicrobial glass composition.

Here, the content ratio of SiO₂ may be more than that of B2O3.

In addition, 1% wt or less of Li₂O may be added and 5% wt or less of Ti₂O may be added.

Also, 1 to 10% wt of CuO may be added.

### Melting

In the melding process S120, the antimicrobial glass composition may be melted.

In this process, the melting may be performed at 1,200 to 1,300 °C for 1 ~ 60 minutes. If the melting temperature is less than 1,200°C or the melting time is less than 1 minute, the antimicrobial glass composition cannot be completely melted, thereby causing immiscibility of glass melt. Conversely, if the melting temperature exceeds 1,300°C or the melting time exceeds 60 minutes, excessive energy and time may be required, thereby not being economical.

### Cooling

In the cooling process S130, the melt antimicrobial glass composition may be cooled to a room temperature.

In this process, cooling may be performed in a method of cooling in furnace. When air cooling or water cooling is applied, the internal stress of the antimicrobial glass might be severely formed and it might cause cracks in some cases. Accordingly, the cooling in furnace is preferred as the cooling method.

### Grinding

In the grinding step S140, the cooled antimicrobial glass may be grinded. At this time, a dry grinder may be used for grinding.

The antimicrobial glass may be finely pulverized to prepare antimicrobial glass powder. The antimicrobial glass power may preferably have an average diameter of 20µm or less.

### Embodiments

Hereinafter, the configuration and operation of the present disclosure will be described in detail through exemplary embodiment of the present disclosure. The above-described aspects, features and advantages are specifically described hereunder with reference to the accompanying drawings such that one having ordinary skill in the art to which the present disclosure pertains can easily implement the technical spirit of the disclosure.

In the *disclosure, detailed descriptions* of known technologies in relation to the disclosure *are* omitted if they are deemed to *make* the *gist* of the *disclosure* unnecessarily *vague.* Below, preferred embodiments according to the disclosure are specifically described with reference to the accompanying drawings. In the drawings, identical reference numerals can denote identical or similar components.

### 1. Antimicrobial glass powder preparation

### Embodiment 1

An antimicrobial glass composition having the composition shown in Table 1 may be melted at a temperature of 1,200°C in an electric furnace. After that, the melt glass composition may be cooled in on a stainless steel sheet in a glass bulk form by the air cooling method, thereby obtaining cullet-type antimicrobial glass. Then, the antimicrobial glass may be pulverized with a dry grinder (e.g., a ball mill) and passed through a 400-mesh sieve so that antimicrobial glass powder having a D50 particle size of 10µm may be prepared. In this instance, Na₂CO₃, K₂CO₃, Li₂CO₃ and CaCO₃ are used as raw materials for N As raw materials for Na₂O, K₂O, Li₂O and CaO, and the other components are the same as those shown in Table 1.

### Embodiment 2

Antimicrobial glass powder having a D50 particle size of 15 µm is prepared in the same method as the method in Embodiment 1, except that the antimicrobial glass composition having the composition shown in Table 1 is melted at a temperature of 1,300°C in an electric furnace.

### Comparative example 1

Antimicrobial glass powder having a D50 particle size of 15 µm is prepared in the same method as the method in Embodiment 1, except that the antimicrobial glass composition having the composition shown in Table 1 is melted at a temperature of 1,200°C in an electric furnace.

### Comparative example 1

Antimicrobial glass powder having a D50 particle size of 15 µm is prepared in the same method as the method in Embodiment 1, except that the antimicrobial glass composition having the composition shown in Table 1 is melted at a temperature of 1,300°C in an electric furnace.

**[Table] (Unit: % by weight)**

| Classification | Embodime nt 1 | Embodime nt 2 | Comparativ e embodimen t 1 | Comparativ e embodimen t 2 |
|---|---|---|---|---|
| SiO₂ | 26 | 36.7 | 35.1 | 37.1 |
| B₂O₃ | 20 | 7.2 | 6.8 | 10.6 |
| Na₂O | 11 | 11.2 | 10.7 | 13.9 |
| K₂O | 6 | 6.1 | 5.9 | 6.3 |
| Li₂O | 2 | - | - | 2.5 |
| Al₂O₃ | 1 | - | - | - |
| TiO₂ | 0.5 | - | - | 13.7 |
| ZnO | 27 | 20.4 | 19.5 | 4.6 |
| CaO | - | 10.2 | 9.8 | |
| MoO₃ | - | - | - | 11.3 |
| CuO | 5 | 5.1 | - | - |
| FeO₃ | 1.5 | 3.1 | - | |
| MnO₂ | - | - | 12.2 | - |
| Total | 100 | 100 | 100 | 100 |

### 2. Antimicrobial degree measurement

Table 2 shows the results of measuring the antimicrobial degree of the antimicrobial glass power prepared according to Embodiment 1 to 2 and comparative embodiments 1 to 2. In this instance, to confirm the antimicrobial degree of each antimicrobial glass powder, the antimicrobial activity values against Staphylococcus aureus and Escherichia coli are measured by ASTM E2149-13a and a shaking flask method. In addition, the antimicrobial activity against pneumococcus and Pseudomonas aeruginosa is further evaluated.

**[Table 2]**

| Classification | | Embodiment 1 | Embodiment 2 | Comparative embodiment 1 | Comparative embodiment 2 |
|---|---|---|---|---|---|
| Antimicrob ial degree (ASTM E2149-13a, Shaking flask method. | Staphylococcus aureus | 99.9% | 99.9% | 60.0% | 75.7% |
| | Escherichia coli | 99.9% | 99.9% | 54.02% | 24.0% |
| | Klebsiella pneumococcus | 99.9% | 99.9% | 52.0% | 17.4% |
| | Pseudomonas aeruginosa | 99.9% | 99.9% | 79.9% | 34.8% |

As shown in Table 1 and Table 2, it may be confirmed that the antimicrobial glass powder prepared according to Embodiment 1 to 2 expresses an antimicrobial degree of 99.9% or more.

However, it may be confirmed that the antimicrobial glass powder prepared according to Comparative embodiment 1 to 2 expresses an antimicrobial degree of 80% or less.

### 3. Injection molded product manufacturing

### Embodiment 3

4% wt of the antimicrobial glass power prepared according to Embodiment 1 and 96% wt of PP (Polypropylene) resin are mixed. After that, the mixture is injection-molded by using an injection molding device, thereby preparing an injection molded product of 200mm (horizontal), 100mm (length) and 3mm (thickness).

### Comparative embodiment 3

4% wt of the antimicrobial glass power prepared according to Embodiment 1 and 96% wt of PP (Polypropylene) resin are mixed. After that, the mixture is injection-molded by using an injection molding device, thereby preparing an injection molded product of 200mm (horizontal), 100mm (length) and 3mm (thickness).

### Comparative embodiment 4

Without adding the antimicrobial glass powder, only PP (Polypropylene) is injection-molded by using the injection molding device, thereby preparing an injection molded product of 200mm (horizontal), 100mm (length) and 3mm (thickness).

### 4. Antimicrobial activity measurement

Table 3 shows the results of measuring antimicrobial activity for injection molded products prepared according to Embodiment 3 and Comparative embodiments 3 and 4. In this instance, to confirm the antimicrobial activity for each injection molded product, antimicrobial activity values against Staphylococcus aureus and E. coli are measured by JIS Z 2801 that is an antimicrobial standard test method, and film adhesion method. In addition, Antimicrobial activity against pneumococcus and Pseudomonas aeruginosa is further evaluated.

Here, the antimicrobial activity values are evaluated based on the following conversion method.

| Antimicrobial activity value | Antimicrobial degree |
|---|---|
| 2.0 or more | 99.0% |
| 3.0 or more | 99.9% |
| 4.0 or more | 99.99% |

**[Table 3]**

| Classification | | Embodiment 3 | Comparative embodiment 3 | Comparative embodiment 4 |
|---|---|---|---|---|
| Antimicrobial degree (JIS Z 2801 that is an antimicrobial standard test method, and film adhesion method | Staphylococcu s aureus | 99.99% | 97.0% | 95.4% |
| | Escherichia coli | 99.99% | 98.1% | 93.2% |
| | Klebsiella pneumococcus | 99.99% | 97.5% | 94.6% |
| | Pseudomonas aeruginosa | 99.99% | 97.6% | 95.1% |

As shown in Table 3, it is measured that the antimicrobial activity value of the injection molded product prepared based on Embodiment 3 has 4.0 or more and confirmed that it expresses 99.99% of antimicrobial degree.

However, it is measured that the antimicrobial activity values of the injection molded products prepared according to Comparative embodiments 3 and 4 have 2.0 or less and confirmed that they express 99.0% or less of antimicrobial degree.

The embodiments are described above with reference to a number of illustrative embodiments thereof. However, the present disclosure is not intended to limit the embodiments and drawings set forth herein, and numerous other modifications and embodiments can be devised by one skilled in the art. Further, the effects and predictable effects based on the configurations in the disclosure are to be included within the range of the disclosure though not explicitly described in the description of the embodiments.

### [Numeral Description]

S110: Mixing
S120: Melting
S130: Cooling
S140: Grinding

## Claims

1. An antimicrobial glass composition comprising:
20 to 45 % by weight (or wt) of SiO₂;
5 to 35% wt of B₂O₃;
1 to 20% wt of at least one or more of Na₂O, K₂O and U₂O;
1 to 15 % by weight of at least one of Al₂O₃ and TiO₂;
10 to 40 % wt of at least one of ZnO and CaO; and
1 to 20% wt of at least one of CuO and Fe₂O₃.

2. The antimicrobial glass composition of claim 1, wherein the content of the SiO₂ is added more than the content of the B₂O₃.

3. The antimicrobial glass composition of claim 1, wherein 1 %wt or less of the Li₂O is added.

4. The antimicrobial glass composition of claim 1, wherein 5 %wt or less of the Ti₂O is added.

5. The antimicrobial glass composition of claim 1, wherein 1 to 10 %wt of the CuO is added.

6. An antimicrobial glass powder preparation method comprising:
(a) mixing and agitating 20 to 45 % wt of SiO₂, 5 to 35% wt of B₂O₃, 1 to 20% wt of at least one of Na₂O, K₂O and Li₂O, 1 to 15 %wt of at least one of Al₂O₃ and TiO₂, 10 to 40 % wt of at least one of ZnO and CaO, and 1 to 20 % wt of at least one of CuO and Fe₂O₃, thereby forming an antimicrobial glass composition;
(b) melting the antimicrobial glass composition;
(c) cooling the melted antimicrobial glass composition;
(d) grinding the cooled antimicrobial glass.

7. The antimicrobial glass powder preparation method of claim 6, wherein the content of the SiO₂ is added more than the content of the B₂O₃ in (a).

8. The antimicrobial glass powder preparation method of claim 6, wherein 1 %wt or less of the Li₂O is added in (a).

9. The antimicrobial glass powder preparation method of claim 6, wherein 5 %wt or less of the Ti₂O is added in (a).

10. The antimicrobial glass powder preparation method of claim 6, wherein 1 to 10 %wt of the CuO is added in (a).

11. The antimicrobial glass powder preparation method of claim 6, wherein the melting is performed at a temperature range of 1,200 to 1,300 °C for 1 to 60 minutes in (b).
